# EUROPEAN PATENT APPLICATION

(11) **EP 4 693 987 A1**
(43) Date of publication of application: **11.02.2026**
(21) Application number: 23931297.8
(22) Date of filing: 04.04.2023
(51) Int. Cl.: H04L 5/00, H04W 4/38

(54) **WIRELESS COMMUNICATION METHOD AND APPARATUS**

(71) Applicant: GUANGDONG OPPO MOBILE TELECOMMUNICATIONS CORP., LTD., Dongguan, Guangdong 523860 (CN)
(72) Inventor: LIU, Yang, Dongguan, Guangdong 523860 (CN); YU, Xinlei, Dongguan, Guangdong 523860 (CN); SHI, Cong, Dongguan, Guangdong 523860 (CN)
(74) Representative: Penza, Giancarlo
(86) International application number: PCT/CN2023/086288
(87) International publication number: WO 2024/207225

(57) **Abstract**

Provided are a wireless communication method and apparatus. The method comprises: a first communication device receiving first information, wherein the first information is used for determining a first beam, which is used for sending or receiving a sensing signal. In the embodiments of the present application, a first communication device can determine, on the basis of first information, a first beam for sending or receiving a sensing signal, such that it is ensured that the determined first beam is more accurate, thereby providing basic conditions for the first beam to be better directed at a sensing target.

## Description

### TECHNICAL FIELD

Embodiments of the present disclosure relate to the technical field of communications, and more particularly to, methods and devices for wireless communication.

### BACKGROUND

In some communication systems (e.g., a New Radio (NR) system), a cellular network may be used to perform a sensing service. In the scenario of performing the sensing service, how the transmitting end/receiving end of a sensing signal determines a beam used to transmit/receive the sensing signal is a problem required to be solved. Especially in a mobile scenario, a relative location between the transmitting end/receiving end of the sensing signal and a sensing target may change, and the beam used to transmit/receive the sensing signal is required to be adjusted accordingly. Then, when the transmitting end/receiving end is located at different locations, how to determine the beam used to transmit/receive the sensing signal is an urgent problem to be solved.

### SUMMARY

The present disclosure provides methods and devices for wireless communication. Various aspects of the present disclosure are described below.

According to a first aspect, there is provided a method for wireless communication, which includes that: a first communication device receives first information, where the first information is used to determine a first beam, and the first beam is used to transmit or receive a sensing signal.

According to a second aspect, there is provided a method for wireless communication, which includes that: a second communication device transmits first information, where the first information is used to determine a first beam, and the first beam is used to transmit or receive a sensing signal.

According to a third aspect, there is provided a device for wireless communication, which is a first communication device. The device for wireless communication includes a first receiving module, configured to receive first information, where the first information is used to determine a first beam, and the first beam is used to transmit or receive a sensing signal.

According to a fourth aspect, there is provided a device for wireless communication, which is a second communication device. The device for wireless communication includes a first transmission module, configured to transmit first information, where the first information is used to determine a first beam, and the first beam is used to transmit or receive a sensing signal.

In a fifth aspect, there is provided a device for wireless communication, which includes a processor, a memory and a communication interface. The memory is configured to store one or more computer programs, and the processor is configured to call the computer program(s) in the memory, to enable the device for wireless communication to perform the method of any one of the first aspect and the second aspect.

In a sixth aspect, a communication system is provided in an embodiment of the present disclosure, and the system includes the aforementioned devices for wireless communication. In another possible design, the system may further include other devices that interact with the devices for wireless communication in the schemes provided by the embodiments of the present disclosure.

In a seventh aspect, a computer-readable storage medium is provided in an embodiment of the present disclosure, and the computer-readable storage medium is configured to store a computer program thereon. The computer program causes the computer to perform a part of or all of the operations in each of the methods of the aforementioned aspects.

In an eighth aspect, a computer program is provided in an embodiment of the present disclosure, and the computer program causes the computer to perform a part of or all of the operations in each of the methods of the aforementioned aspects.

In a ninth aspect, a computer program product is provided in an embodiment of the present disclosure. The computer program product includes a non-transitory computer-readable storage medium configured to store a computer program, and the computer program is operable to enable a computer to perform a part of or all of the operations in each of the methods of the aforementioned aspects. In some implementations, the computer program product may be a software installation package.

In a tenth aspect, a chip is provided in an embodiment of the present disclosure, and the chip includes a memory and a processor. The processor is configured to call and run a computer program from the memory, to implement a part of or all of the operations in each of the methods of the aforementioned aspects.

In the embodiments of the present disclosure, the first communication device (the transmitting end or the receiving end of the sensing signal) can determine, based on the first information, the first beam used to transmit or receive the sensing signal, which is conducive to ensuring more accurate determination of the first beam, thereby providing basic conditions for enabling the first beam to be better directed to the sensing target.

### BRIEF DESCRIPTION OF THE DRAWINGS

FIG. 1 is an example diagram of a system architecture of a wireless communication system to which an embodiment of the present disclosure is applied.
FIGS. 2A to 2F are schematic diagrams of application scenarios according to embodiments of the present disclosure.
FIG. 3 is a schematic flowchart of a method for wireless communication according to an embodiment of the present disclosure.
FIG. 4 is a schematic flowchart of a method for wireless communication according to another embodiment of the present disclosure.
FIG. 5 is a schematic flowchart of a method for wireless communication according to yet another embodiment of the present disclosure.
FIG. 6 is an example diagram of a first communication device performing a sensing service by using different beams according to an embodiment of the present disclosure.
FIG. 7 is a schematic structural diagram of a device for wireless communication according to an embodiment of the present disclosure.
FIG. 8 is a schematic structural diagram of a device for wireless communication according to another embodiment of the present disclosure.
FIG. 9 is a schematic structural diagram of a communication device according to an embodiment of the present disclosure.

### DETAILED DESCRIPTION

### Communication system architecture

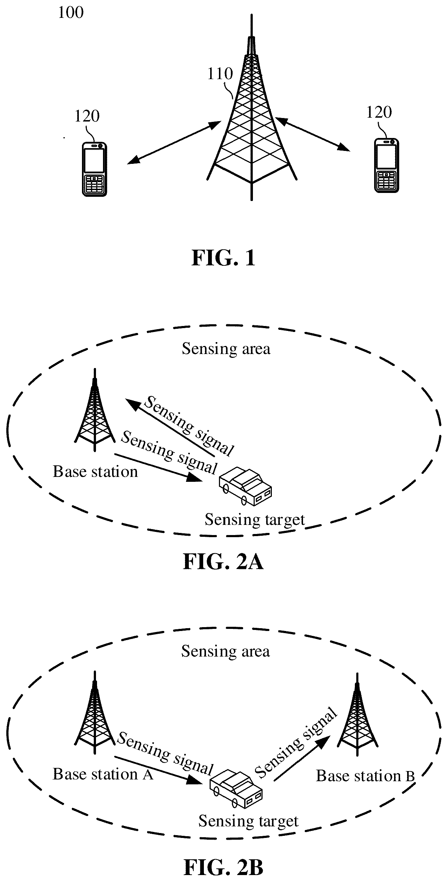

FIG. 1 is an example diagram of a system architecture of a wireless communication system 100 to which an embodiment of the present disclosure is applied. The wireless communication system 100 may include a network device 110 and a terminal device 120. The network device 110 may be a device that communicates with the terminal device 120. The network device 110 may provide communication coverage for a specific geographic area and may communicate with terminal device(s) 120 within the coverage.

FIG. 1 exemplarily illustrates one network device and two terminal devices. Optionally, the wireless communication system 100 may include multiple network devices, and another number of terminal devices may be included within the coverage of each network device, which are not limited in the embodiments of the present disclosure.

Optionally, the wireless communication system 100 may further include other network entities, such as, a network controller, a mobility management entity, etc., which are not limited in the embodiments of the present disclosure.

It is to be understood that the technical schemes of the embodiments of the present disclosure may be applied to various communication systems, such as: a 5th generation (5G) system or a new radio (NR) system, a long term evolution (LTE) system, a LTE frequency division duplex (FDD) system, a LTE time division duplex (TDD) system, etc. The technical schemes provided in the present disclosure may also be applied to future communication systems, such as: a beyond fifth generation (B5G) mobile communication system, a 6th generation mobile communication system, a satellite communication system, etc.

The terminal device in the embodiments of the present disclosure may also be referred to as a User Equipment (UE), an access terminal, a user unit, a user station, a mobile site, a mobile station (MS), a mobile terminal (MT), a remote station, a remote terminal, a mobile device, a user terminal, a terminal, a wireless communication device, a user agent or a user device, etc. The terminal device in the embodiments of the present disclosure may be a device that provides voice and/or data connectivity to a user, and may be used to connect people, objects and machines, such as a handheld device with wireless connection function, a vehicle-mounted device, etc. The terminal device in the embodiments of the present disclosure may be a mobile phone, a Pad, a notebook computer, a palmtop computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, or a wireless terminal in smart home, etc. Optionally, the UE may be used to act as a base station. For example, the UE may act as a scheduling entity that provides sidelink signal(s) between UEs in the vehicle to everything (V2X), the device to device (D2D) or the like. For example, a cellular phone communicates with a car by using the sidelink signal(s). The cellular phone communicates with the device in smart home without relaying communication signal(s) by the base station.

The network device in the embodiments of the present disclosure may be a device configured to communicate with the terminal device, and the network device may also be referred to as an access network device or a radio access network device. For example, the network device may be a base station. The network device in the embodiments of the present disclosure may refer to a radio access network (RAN) node (or device) that accesses the terminal device to a wireless network. The base station may broadly cover or be replaced with the following names, such as, a Node B (NodeB), an evolved NodeB (eNB), a next generation NodeB (gNB), a relay station, an access point, a transmitting and receiving point (TRP), a transmitting point (TP), a master eNB (MeNB), a secondary eNB (SeNB), a multi-standard radio (MSR) node, a home base station, a network controller, an access node, a wireless node, an access Point (AP), a transmission node, a transceiving node, a base band unit (BBU), a remote radio unit (RRU), an active antenna unit (AAU), a remote radio head (RRH), a central unit (CU), a distributed unit (DU), a positioning node, etc. The base station may be a macro base station, a micro base station, a relay node, a donor node or the like, or a combination thereof. The base station may also be a communication module, a modem or a chip provided in the aforementioned device or apparatus. The base station may also be a mobile switching center, and a device that performs the function(s) of the base station in Device-to-Device (D2D) communication, Vehicle-to-Everything (V2X) communication, Machine-to-Machine (M2M) communication, a network-side device in a 6G network, a device that performs the function(s) of the base station in future communication systems, etc. The base station may support networks with the same access technology or different access technologies. The specific technologies adopted by the network device as well as the specific device form thereof are not limited in the embodiments of the present disclosure.

The base station may be fixed or mobile. For example, a helicopter or unmanned aerial vehicle may be configured to act as a mobile base station, and one or more cells may move according to the location of the mobile base station. In other examples, the helicopter or unmanned aerial vehicle may be configured to be used as a device that communicates with another base station.

In some deployments, the network device in the embodiments of the present disclosure may be a CU or a DU, or the network device may include a CU and a DU. The gNB may also include an AAU

The network device and the terminal device may be deployed on land, and may include an indoor or outdoor device, a hand-held device, or a vehicle-mounted device. The network device and the terminal device may also be deployed on the water. The network device and the terminal device may also be deployed in airplanes, balloons and satellites in the air. The scenario in which the network device and the terminal device are located is not limited in the embodiments of the present disclosure.

It is also to be understood that all or part of the functions of the communication device in the present disclosure may also be implemented by software functions running on the hardware or by virtualized functions instantiated on a platform (e.g., a cloud platform).

### Wireless sensing

The current cellular network (e.g., the 4G network, the 5G network) is mainly used for wireless data transmission and communication. However, in fact, the wireless electromagnetic wave signal(s) used in the cellular network may not only be used for the wireless data transmission and communication, but also have environmental sensing capability. For example, the wireless electromagnetic wave signal(s) may be used for action/gesture recognition of the user, respiration monitoring, movement speed measurement of the terminal device, environmental imaging, weather monitoring, etc. Therefore, in the future communication system (e.g., the B5G system, the 6G system, etc.), in addition to the data transmission and communication, the cellular network may be further used to perform sensing service(s) (or wireless sensing service(s)), for example, acquiring sensing information. The objective of the wireless sensing is to obtain a sensing result of a sensing target. For example, a series of sensing results are acquired, such as, a speed of the sensing target, a distance of the sensing target, a movement direction of the sensing target as well as a shape of the sensing target.

In order to support the sensing capability in the communication system, as an implementation, a Sensing Function (SF) network element and a corresponding flow may be added into the communication system. In such way, when an application layer (or application) transmits a sensing request for the sensing target (e.g., a target UE, a target object, etc.) to a core network, the core network may select, through the SF network element or an Access and Mobility Management Function (AMF), an appropriate access network device or a secondary UE; and may further trigger a capability of the access network device or the secondary UE for performing sensing-related wireless measurement, to initiate measurement of sensing information, thereby acquiring the sensing results.

In some embodiments, to avoid introducing excessive air interface enhancements, the communication system may consider multiplexing the existing air interface signals as much as possible to perform the sensing service(s). For example, in the initial stage of B5G integrated sensing and communication, the existing air interface signals may be multiplexed as much as possible to perform the sensing service(s).

The sensing service(s) may be performed by using the wireless sensing technology. In the wireless sensing technology, the characteristics of signal propagation space may be acquired by analyzing the change of the wireless signal during the propagation, so as to implement the sensing of the environment or scene. Since the procedure in the wireless communication technology is similar to the procedure in the wireless sensing technology, the wireless communication technology may be combined with the wireless sensing technology, to sense the surrounding environment while implementing communication. In some embodiments, the combination of the wireless communication technology and the wireless sensing technology may be understood as integrated sensing and communication.

There are many wireless sensing scenarios of the integrated sensing and communication, and the main wireless sensing scenarios of the integrated sensing and communication are exemplarily introduced below in conjunction with FIGS. 2A to 2F. It is to be noted that the following scenarios are only some examples, and the technical schemes of the present disclosure may be applied to the following scenarios, which are not intended to limit the technical schemes of the present disclosure. The present disclosure can still be applicable to other application scenarios.

With reference to FIG. 2A, FIG. 2A is a schematic diagram of an application scenario according to an embodiment of the present disclosure. FIG. 2A is an example of a case where a base station in the communication system serves as both a transmitting end and a receiving end of a sensing signal. Therefore, a sensing link corresponding to FIG. 2A may also be referred to as a base station echo sensing link. In FIG. 2A, the base station may transmit the sensing signal, and the sensing signal may be reflected back to the base station through the sensing target (e.g., a car in the surrounding environment). In such way, the base station can perform the sensing measurement on the sensing signal, and further acquire the sensing result.

With reference to FIG. 2B, FIG. 2B is a schematic diagram of another application scenario according to an embodiment of the present disclosure. FIG. 2B is an example of a case where two base stations serve as the transmitting end and the receiving end of the sensing signal, respectively. Therefore, a sensing link corresponding to FIG. 2B may also be referred to as an inter-base station sensing link. In FIG. 2B, the base station A may transmit the sensing signal, and the sensing signal may be reflected to the base station B through the sensing target (e.g., the car in the surrounding environment). In such way, the base station B can perform the sensing measurement on the sensing signal, and further acquire the sensing result.

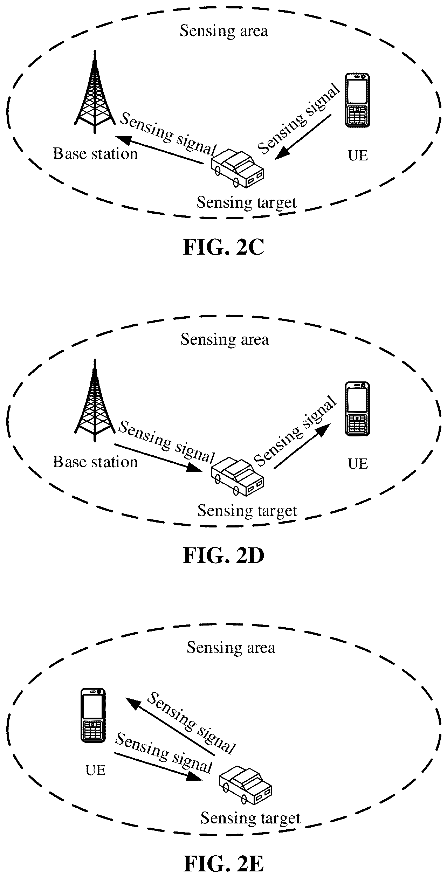

With reference to FIGS. 2C and 2D, FIGS. 2C and 2D are schematic diagrams of yet another application scenario according to an embodiment of the present disclosure. FIGS. 2C and 2D are examples of a case where a base station and a UE serve as the transmitting end and the receiving end of the sensing signal, respectively. Therefore, sensing links corresponding to FIGS. 2C and 2D may also be referred to as air interface sensing links. FIG. 2C illustrates an example of an air interface uplink sensing link. In FIG. 2C, the UE may transmit the sensing signal, and the sensing signal may be reflected to the base station through the sensing target (e.g., the car in the surrounding environment). In such way, the base station can perform the sensing measurement on the sensing signal, and further acquire the sensing result. FIG. 2D illustrates an example of an air interface downlink sensing link. In FIG. 2D, the base station may transmit the sensing signal, and the sensing signal may be reflected to the UE through the sensing target (e.g., the car in the surrounding environment). In such way, the UE can perform the sensing measurement on the sensing signal, and further acquire the sensing result.

With reference to FIG. 2E, FIG. 2E is a schematic diagram of another application scenario according to an embodiment of the present disclosure. FIG. 2E is an example of a case where the UE in the communication system serves as both the transmitting end and the receiving end of the sensing signal. Therefore, a sensing link corresponding to FIG. 2E may also be referred to as a UE echo sensing link. In FIG. 2E, the UE may transmit the sensing signal, and the sensing signal may be reflected back to the UE through the sensing target (e.g., the car in the surrounding environment). In such way, the UE can perform the sensing measurement on the sensing signal, and further acquire the sensing result.

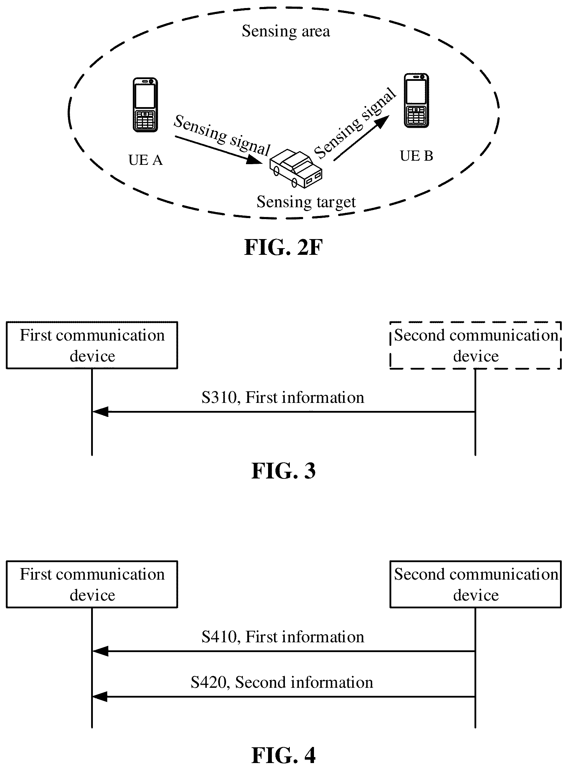

With reference to FIG. 2F, FIG. 2F is a schematic diagram of another application scenario according to an embodiment of the present disclosure. FIG. 2F is an example of a case where two UEs serve as the transmitting end and the receiving end of the sensing signal, respectively. Therefore, a sensing link corresponding to FIG. 2F may also be referred to as an inter-UE station sensing link. In FIG. 2F, the UE A may transmit the sensing signal, and the sensing signal may be reflected to the UE B through the sensing target (e.g., the car in the surrounding environment). In such way, the UE B can perform the sensing measurement on the sensing signal, and further acquire the sensing result.

### Beamforming

The beamforming is a new technology introduced in 5G. After introducing the beamforming, both of the base station and the terminal device may use a beam with the energy concentrated in a specific spatial direction, to transmit and receive a communication signal.

Since the coverage of the beam becomes narrower after the beamforming, the base station and the terminal device need to determine a Transmit-Receive (Tx-Rx) beam pair, to successfully receive or transmit the communication signal in the specific direction. In order to determine the "beam pair" including a transmit beam of the transmitting end and a receive beam of the receiving end, for example, to determine a "beam pair" including a downlink transmit beam of the base station and a receive beam of the UE, each of the transmitting end and the receiving end may determine an "optimal transmit-receive beam pair" in a manner of beam scanning. As an implementation, the transmitting end and the receiving end may determine the "optimal transmit-receive beam pair" through the following implementations.

In a first operation, when the beam of the receiving end is given, beams of the transmitting end may be scanned, and the receiving end may determine a candidate transmit beam based on the measured Reference Signal Received Power (RSRP) of multiple transmit beams, and further report the candidate transmit beam to the transmitting end.

In a second operation, when the beam of the transmitting end is given, beams of the receiving end may be scanned, and the receiving end may determine a candidate receive beam based on the RSRP of the transmit beams measured by the multiple receive beams, and further report the candidate receive beam to the transmitting end.

In some embodiments, the base station may transmit the communication signal (e.g., a reference signal) for multiple times to the UE by using the beam with unchanged direction. In some embodiments, the base station may transmit communication signal to the UE by using different beams.

As an implementation, the UE may determine, based on an Information Element (IE) *NZP-CSI-RS-ResourceSet,* whether the base station transmits the communication signal by using the beam with the unchanged direction or using the different beams. Exemplarily, when the base station sets a repetition IE in the *NZP-CSI-RS-ResourceSet* to be "off", the UE may know that the base station uses different beams when transmitting the communication signal; otherwise, when the base station sets the repetition IE to be "on", the UE may know that the base station uses the beam with the unchanged direction when transmitting the communication signal.

The IE *NZP-CSI-RS-ResourceSet* is a set of Non-Zero-Power (NZP) CSI-RS resources (i.e., IDs of the NZP CSI-RS) and set-specific parameters. In order to facilitate understanding, an example of the IE *NZP-CSI-RS-ResourceSet* is given below.

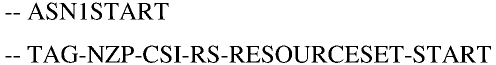

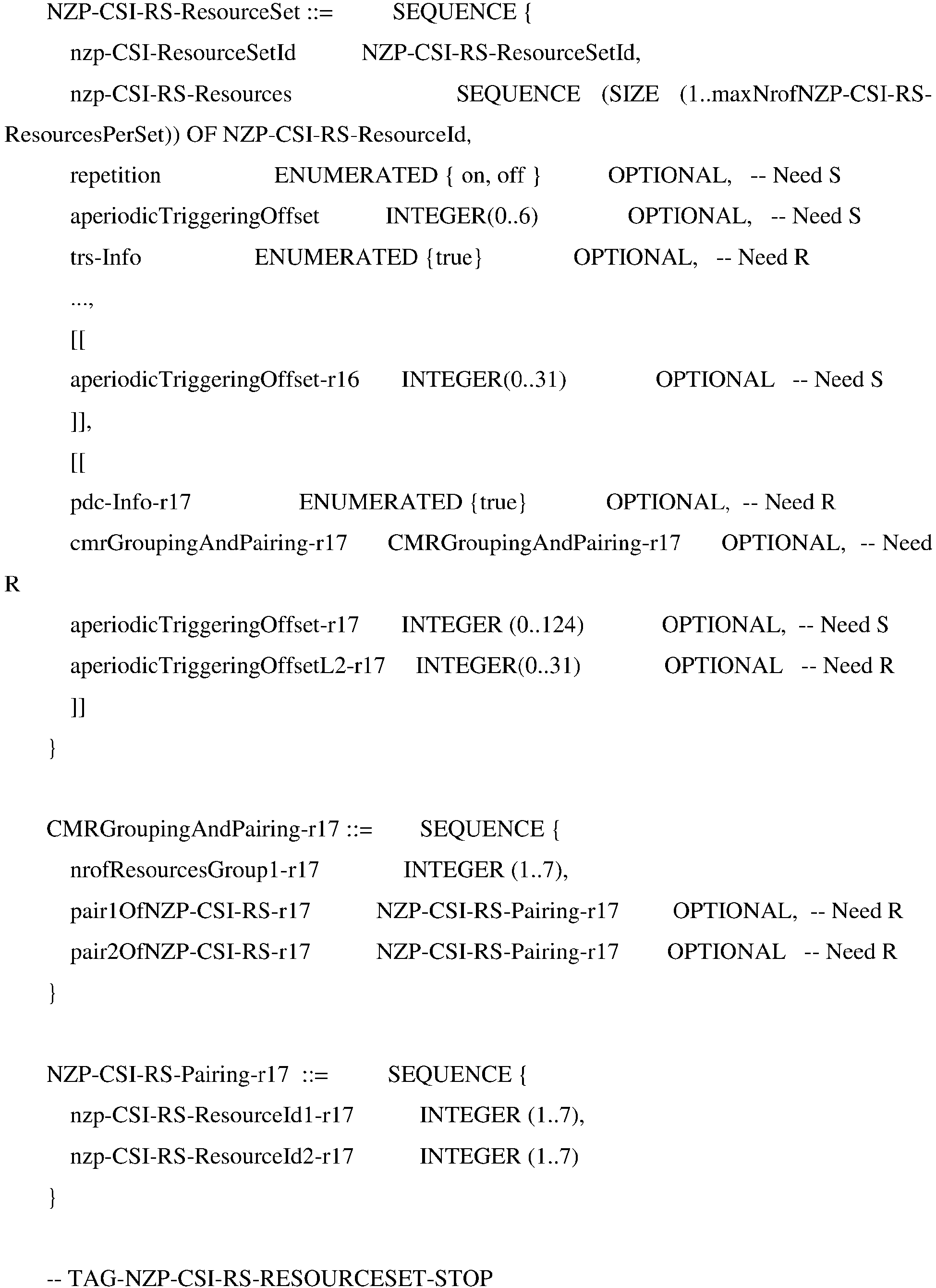

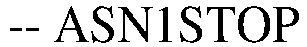

If the base station notifies, in the reference signal configuration transmitted to the UE, the UE that the transmit beam of multiple NZP CSI-RS resources in a certain resource set is changed, when receiving such information, the UE may initiate the scanning of the transmit beams (the receive beam is unchanged) to determine an optimal transmit beam. Subsequently, after the repetition IE in the IE *NZP-CSI-RS-ResourceSet* is set to be "on", the UE may perform the scanning on the receive beams to determine the optimal receive beam. Based on this, an optimal transmit-receive beam pair between the base station and the UE may be determined. In some embodiments, according to channel reciprocity, the beam with the best signal received quality may also be used as the beam for the data transmission.

### Beam indication

If multiple transmit antenna-receive antenna pairs are maintained simultaneously between the UE and the base station, the base station may select which transmit antenna to be used when transmitting a Physical Downlink Shared Channel (PDSCH) or a Physical Downlink Control Channel (PDCCH) in the downlink. In this case, the base station may transmit such information to the UE, to eanble the UE to switch to a receive antenna that is matched with the transmit antenna selected by the base station. This mechanism may be referred to as beam indication. That is, the base station may transmit beam indication information to the UE, to enable the UE to determine the suitable receive beam.

In some embodiments, the beam indication may be implemented through concepts of the Transmission Configuration Indicator (TCI) state and Quasi-Co-Location (QCL). As an implementation, the base station may configure a set of TCI states for the UE through high-level signaling. Then, the base station may transmit TCI activation signaling to the UE, to enable the UE to determine an ID of a TCI state for receiving the PDCCH or the PDSCH, thereby determining the beam information for receiving the PDCCH or the PDSCH.

In some embodiments, each of the set of TCI states configured by the base station for the UE may correspond to a set of reference signals, such as, a ID of the CSI-RS or a Synchronization Signal/PBCH block (SSB), to represent that the characteristics of spatial filtering (or referred to as the beam) for the transmission of the PDSCH and PDCCH match with one of the aforementioned reference signals.

As an implementation, the TCI state may include one or more of the following configurations: an identifier (ID) of a TCI state; QCL Information 1; and QCL information 2. The ID of the TCI state may be used to identify the TCI state. The QCL information (such as, the QCL information 1, the QCL information 2, etc.) may include: a QCL type configuration and a QCL reference signal configuration.

In some embodiments, the QCL type configuration may be one of the following: a QCL Type A, a QCL Type B, a QCL Type C, or a QCL Type D. However, the embodiments of the present disclosure are not limited thereto, and in the case where the QCL type includes other types, the QCL type configuration may also be other types.

In some embodiments, the QCL reference signal configuration may include one or more of the following information: an ID of a cell in which the reference signal is located, a bandwidth part (BWP) ID, and an ID of the reference signal. Taking the reference signal to be the CSI-RS or the SSB as an example, the ID of the reference signal may be, such as, an ID of the CSI-RS resource or an SSB number.

As an implementation, the IE *TCI-State* may associate one or two DL reference signals with a corresponding QCL type, to perform the beam indication by using the TCI state.

In order to facilitate understanding, an example of the IE *TCI-State* is provided below.

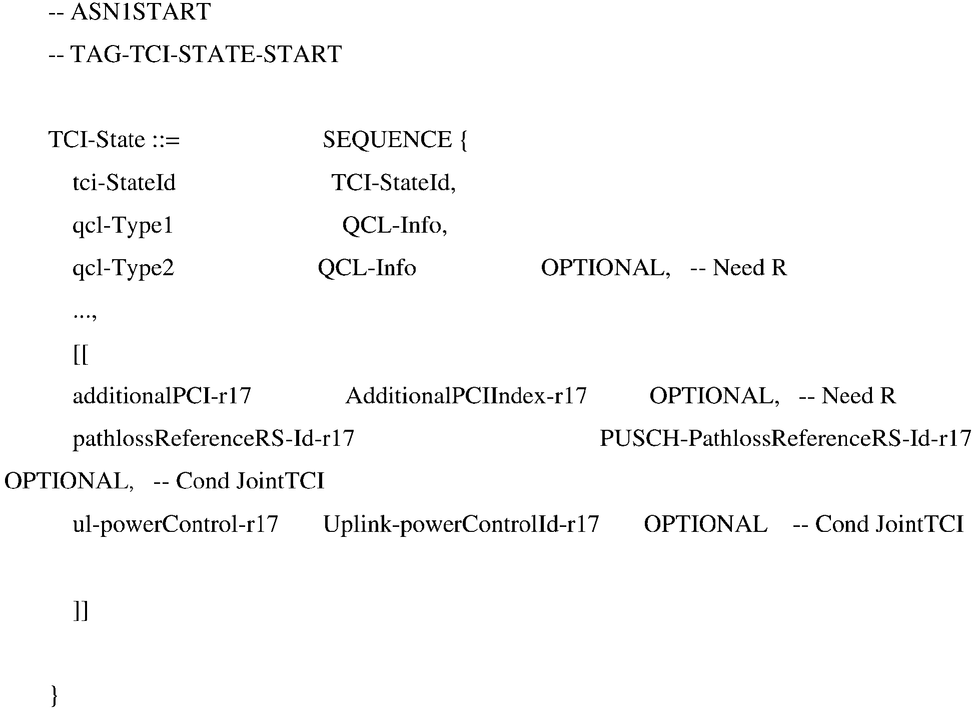

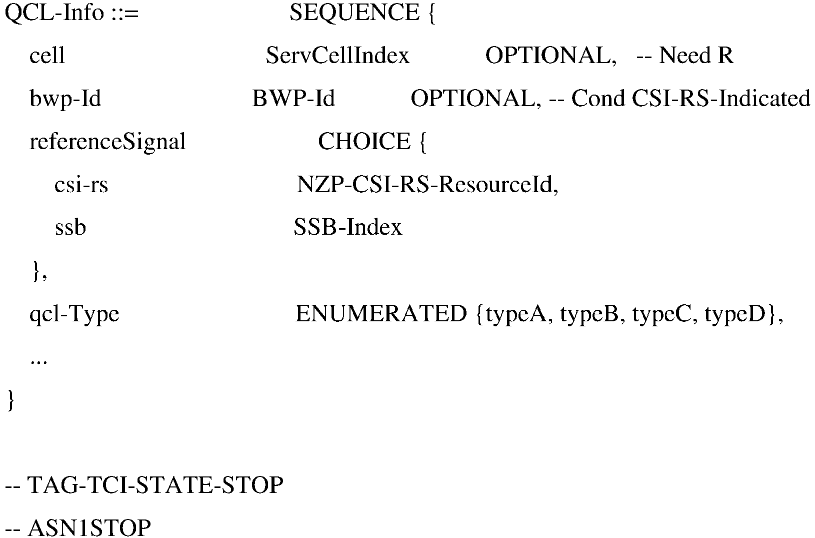

### Activation/Deactivation of TCI state

The network may activate and deactivate the configured TCI states for PDSCH of a Serving Cell or a set of Serving Cells by sending the TCI States Activation/Deactivation for UE-specific PDSCH Medium Access Control Control Element (MAC CE), where the Serving Cell or the set of Serving Cells may be configured in a field of *simultaneousTCI-UpdateList1* or *simultaneousTCI-UpdateList2.* The network may activate and deactivate the configured TCI states for a codepoint of the Downlink Control Information (DCI) Transmission configuration indication field as specified for PDSCH of a Serving Cell by sending the Enhanced TCI States Activation/Deactivation for UE-specific PDSCH MAC CE. The configured TCI states for PDSCH may be initially deactivated upon (re-)configuration by upper layers and after reconfiguration with sync.

During the procedure of the activation/deactivation of the TCI state, the MAC entity may perform following operations.

If a MAC entity receives a TCI States Activation/Deactivation for UE-specific PDSCH MAC CE on a Serving Cell:
the MAC entity indicates to lower layers the information regarding the TCI States Activation/Deactivation for UE-specific PDSCH MAC CE.

If the MAC entity receives an Enhanced TCI States Activation/Deactivation for UE-specific PDSCH MAC CE on a Serving Cell:
the MAC entity indicates to lower layers the information regarding the Enhanced TCI States Activation/Deactivation for UE-specific PDSCH MAC CE.

As described in foregoing, the cellular network may be used to perform the sensing service(s). In the scenario of performing the sensing service(s) through the cellular network, the transmitting end/receiving end of the sensing signal needs to transmit/receive the sensing signal on the beam; then, how the transmitting end/receiving end of the sensing signal determines the beam used to transmit/receive the sensing signal is a problem required to be solved. Especially in the mobile scenario, a relative location between the transmitting end/receiving end of the sensing signal and the sensing target may change, and the beam used to transmit/receive the sensing signal is required to be adjusted accordingly. Then, when the transmitting end/receiving end is located at different locations, how to determine the beam used to transmit/receive the sensing signal is an urgent problem to be solved.

In view of the aforementioned problems, the embodiments of the present disclosure provide methods and devices for wireless communication, to enable the transmitting end/receiving end of the sensing signal to determine, based on the first information, the first beam used to transmit/receive the sensing signal, which is conducive to ensuring more accurate determination of the first beam, thereby providing basic conditions for enabling the first beam to be better directed to the sensing target.

The method embodiments of the present disclosure will be described in detail with reference to FIGS. 3 to 6 below.

FIG. 3 is a schematic flowchart of a method for wireless communication according to an embodiment of the present disclosure. The method illustrated in FIG. 3 is described from the perspective of interaction between a first communication device and a second communication device. The first communication device and the second communication device will be introduced respectively below.

The first communication device refers to the transmitting end or the receiving end of the sensing signal. In other words, the first communication device may transmit or receive the sensing signal. In addition, the first communication device may also be understood as a receiving end of the first information described below. The second communication device refers to a transmitting end of the first information.

In some embodiments, if the first communication device is the transmitting end of the sensing signal, the second communication device may be the receiving end of the sensing signal. That is, the receiving end of the sensing signal may transmit the first information to the transmitting end of the sensing signal.

In some embodiments, if the first communication device is the receiving end of the sensing signal, the second communication device may be the transmitting end of the sensing signal. That is, the transmitting end of the sensing signal may transmit the first information to the receiving end of the sensing signal.

However, the embodiments of the present disclosure are not limited thereto, and the first information may be transmitted to the first communication device by another communication device other than the transmitting end/receiving end of the sensing signal. That is, the second communication device may be another communication device other than the transmitting end/receiving end of the sensing signal. For example, the second communication device may be a core network device, such as an AMF network element, an SF network element, etc.

In some embodiments, the first communication device may be a terminal device (e.g., the terminal device 120 illustrated in FIG. 1), and the second communication device may be one of the following: an access network device (e.g., the access network device 110 illustrated in FIG. 1), a core network device, or a terminal device. Taking the transmitting end and the receiving end of the sensing signal to be the terminal device and the access network device (e.g., the terminal device transmits the sensing signal to the access network device, or the access network device transmits the sensing signal to the terminal device) as an example, in some embodiments, the access network device may transmit the first information to the terminal device, to enable the terminal device to determine a beam (i.e., the first beam hereinafter) for transmitting or receiving the sensing signal. Additionally, in some embodiments, the core network device may transmit the first information to the terminal device, to enable the terminal device to determine the beam for transmitting or receiving the sensing signal. Taking the transmitting end and the receiving end of the sensing signal both to be the terminal device as an example, in some embodiments, the access network device or the core network device may transmit the first information to the terminal device. Additionally, in some embodiments, the terminal device that transmits the sensing signal may transmit the first information to the terminal device that receives the sensing signal; or the terminal device that receives the sensing signal may transmit the first information to the terminal device that transmits the sensing signal.

In some embodiments, the first communication device may be an access network device (e.g., the access network device 110 illustrated in FIG. 1), and the second communication device may be one of the following: an access network device, or a core network device. Taking the transmitting end and the receiving end of the sensing signal to be the terminal device and the access network device (e.g., the terminal device transmits the sensing signal to the access network device, or the access network device transmits the sensing signal to the terminal device) as an example, in some embodiments, the core network device may transmit the first information to the access network device, to enable the access network device to determine the beam for transmitting or receiving the sensing signal. Taking the transmitting end and the receiving end of the sensing signal both to be the access network device as an example, in some embodiments, the core network device may transmit the first information to the access network device. Additionally, in some embodiments, the access network device that transmits the sensing signal may transmit the first information to the access network device that receives the sensing signal; or the access network device that receives the sensing signal may transmit the first information to the access network device that transmits the sensing signal.

The core network device mentioned in the embodiments of the present disclosure may be various, which is not limited in the embodiments of the present disclosure. For example, in some embodiments, the core network device may be the SF network element. Alternatively, in some embodiments, the core network device may be the AMF network element, or the like.

The method illustrated in FIG. 3 includes an operation S310, and the operation S310 is introduced below.

At operation S310, a first communication device receives first information. The first information is used to determine a first beam.

The first beam may be used to transmit or receive a sensing signal; i.e., the first beam is a beam used to transmit or receive the sensing signal. In other words, the first beam may be used to perform the sensing service(s).

In some embodiments, the beam (e.g., the first beam) mentioned in the embodiments of the present disclosure may also be referred to as a spatial domain filter, a spatial domain parameter, or other names. In order to facilitate understanding, the beam is taken as an example to be mainly introduced in the embodiments in the present disclosure, and the beam, the spatial domain filter, the spatial domain parameter and the like may be used interchangeably.

In some embodiments, the first beam may be different from a beam used for the first communication device to transmit/receive a communication signal.

In some embodiments, the first beam may be the same as the beam used for the first communication device to transmit/receive the communication signal.

In the embodiments of the present disclosure, the first beam is determined by using the first information. The first communication device determines the first beam based on the first information, which is conducive to ensuring more accurate determination of the first beam, thereby providing basic conditions for enabling the first beam to be better directed to the sensing target.

In some embodiments, the first information may be transmitted by the second communication device to the first communication device.

In some embodiments, the first information may be used to indicate the first beam. For example, the first information may include first beam indication information corresponding to the first beam. In such way, the first communication device may determine, based on the first beam indication information, the first beam used to transmit or receive the sensing signal.

In some embodiments, the first information may be used to indicate location information of a sensing target. In some embodiments, the sensing target (such as, a sensing UE, a sensing object, etc.) may also be referred to as another name, such as, a sensed target, a target to be sensed, etc., which is not limited in the embodiments of the present disclosure.

In order to facilitate understanding, in conjunction with a first embodiment and a second embodiment, the first information is described in detail below by respectively taking the first information to be used to indicate the first beam and the first information to be used to indicate the location information of the sensing target as examples.

### First embodiment

In the first embodiment, the first information may be used to indicate the first beam. As an implementation, the first information may indicate the first beam by using beam indication information. For example, the first information may include first beam indication information corresponding to the first beam, so as to indicate the first beam to the first communication device through the first beam indication information.

In some embodiments, the first information may be different from second beam indication information used for the first communication device to transmit or receive a communication signal. In other words, the first beam indication information is different from the second beam indication information used for the first communication device to transmit or receive the communication signal. In such way, through the first information, the second communication device may configure, for the first communication device, the beam indication information that is separately used to transmit or receive the sensing signal, or configure, for the first communication device, (independent) beam indication information that is different from the beam indication information used to transmit or receive the communication signal. Therefore, the problem of poor transmission performance caused by transmitting or receiving the sensing signal by using the beam indication information for transmitting or receiving the communication signal can be avoided. Taking the terminal device and the access network device to perform the sensing service(s) as an example, in a case that a spatial relationship between the terminal device and the access network device is different from a spatial relationship between the sensing target and the terminal device, the second communication device (e.g., the access network device) may configure, for the first communication device (e.g., the terminal device), the beam indication information that is separately used to perform the sensing service(s). Thus, the transmission performance can be improved.

In some embodiments, the first information may be the same as the second beam indication information used for the first communication device to transmit or receive the communication signal. In other words, the first beam indication information may be the same as the second beam indication information used for the first communication device to transmit or receive the communication signal. In such way, the first communication device may multiplex the beam used to transmit or receive the communication signal to transmit or receive the sensing signal. Taking the terminal device and the access network device to perform the sensing service(s) as an example, in a case that the spatial relationship between the terminal device and the access network device is the same as the spatial relationship between the sensing target and the terminal device, the terminal device may multiplex the second beam indication information indicated by the access network device. Thus, the signaling overhead can be saved.

In some embodiments, the first beam indication information may be indicated by using a TCI state. For example, the first beam indication information may include one or more of the following configurations: an ID of a TCI state, an ID of a QCL reference signal, and a QCL type.

In some embodiments, the ID of the QCL reference signal may be identified by using a SSB number. In some embodiments, the ID of the QCL reference signal may be identified by using an ID of a CSI-RS. The embodiments of the present disclosure are not limited thereto.

The manner of carrying the first information is not limited in the embodiments of the present disclosure. Exemplarily, the first information may be carried in one or more of the following: Non-Access Stratum (NAS) signaling, Radio Resource Control (RRC) signaling, MAC CE signaling, and an interface between access network devices.

The specific type of the NAS signaling is not limited in the embodiments of the present disclosure. Exemplarily, the NAS signaling may be a signal sensing assistance message. That is, the second communication device may transmit the first information to the first communication device through the signal sensing assistance message.

The interface between the access network devices is not limited in the embodiments of the present disclosure. Exemplarily, the interface between the access network devices may be, such as, an Xn interface, an NG interface, or the like.

As an example, if the first communication device is the terminal device and the second communication device is the access network device, the first information may be carried in the RRC signaling or the MAC CE signaling.

As another example, if the first communication device is the terminal device and the second communication device is the core network device, the first information may be carried in the NAS signaling.

As yet another example, both the first communication device and the second communication device are the access network devices, and the first information may be transmitted/received through the interface between the access network devices.

In some embodiments, the first information may be preconfigured. For example, the first information may be preconfigured by the second communication device.

In some embodiments, the first information may include one piece of beam indication information, and the beam indication information may be the first beam indication information. In such case, after receiving the first information, the first communication device may determine the first beam based on the first beam indication information. In other words, the first communication device may transmit/receive the sensing signal based on the first beam corresponding to the first beam indication information.

In some embodiments, the first information may include multiple pieces of candidate beam indication information. In other words, the first information may include a candidate beam set or a candidate beam list. The multiple pieces of candidate beam indication information may include the first beam indication information corresponding to the first beam, i.e., the first beam indication information may belong to the multiple pieces of candidate beam indication information.

In some embodiments, in the case that the first information includes the multiple pieces of candidate beam indication information, the first communication device may further determine, based on the second information, first beam indication information corresponding to the first beam, which is described below in conjunction with FIG. 4.

FIG. 4 is a schematic flowchart of a method for wireless communication according to another embodiment of the present disclosure. As illustrated in FIG. 4, the method may include operations S410 and S420.

At operation S410, a first communication device receives first information. The first information is used to determine a first beam.

The first information includes multiple pieces of candidate beam indication information. In other words, the first information may be used to indicate or configure the multiple pieces of candidate beam indication information.

Other descriptions of the first information and the first beam in the operation S410 may be referred to the foregoing descriptions of the operation S310, which will not be repeated here for the sake of brevity.

At operation S420, the first communication device receives second information. The second information is used to indicate first beam indication information.

That is, in the case that the first information indicates the multiple pieces of candidate beam indication information, the second information may be used to activate one or more of the multiple pieces of candidate beam indication information, to be used as the first beam indication information corresponding to the first beam.

The manner of carrying the second information is not limited in the embodiments of the present disclosure. Exemplarily, the second information may be carried in first signaling, and the first signaling may include one or more of the following: MAC CE signaling, RRC signaling, Sidelink Control Information (SCI), and an interface between access network devices.

As an example, the first communication device is the terminal device, the second communication device is the access network device, and the second information may be carried in the MAC CE signaling or the RRC signaling. However, the embodiments of the present disclosure are not limited thereto, and for example, the second information may be carried in DCI.

As another example, both of the first communication device and the second communication device are the terminal devices, and the second information may be carried in the SCI.

As yet another example, both of the first communication device and the second communication device are the access network devices, and the second information may be transmitted/received through the interface between the access network devices.

In some embodiments, the second information may be transmitted by the second communication device to the first communication device. That is, in some embodiments, the first information and the second information may be transmitted to the first communication device by the same communication device.

In some embodiments, the second information may indicate the first beam indication information by using an ID of a TCI state.

In some embodiments, the signaling carrying the second information may be separately configured. Taking the signaling carrying the second information to be the MAC CE signaling as an example, the second communication device may separately configure one piece of MAC CE signaling to indicate the first beam indication information.

In some embodiments, the signaling used to configure the first beam indication information may be different from the signaling used to configure the second beam indication information (the second beam indication information is used to indicate the beam for the first communication device to transmit or receive the communication signal). For example, the signaling used to configure the first beam indication information may be the MAC CE signaling, and the signaling used to configure the second beam indication information may be the RRC signaling. Alternatively, both of the signaling used to configure the first beam indication information and the signaling used to configure the second beam indication information may be the MAC CE signaling, but the two pieces of MAC CE signaling may be different from each other.

In some embodiments, the signaling used to configure the first beam indication information being different from the signaling used to configure the second beam indication information, may be understood as that a logical channel number corresponding to the signaling used to configure the first beam indication information is different from a logical channel number corresponding to the signaling used to configure the second beam indication information. Taking the signaling used to configure the first beam indication information and the signaling used to configure the second beam indication information both to be the MAC CE signaling as an example, the two pieces of MAC CE signaling may have different logical channel numbers.

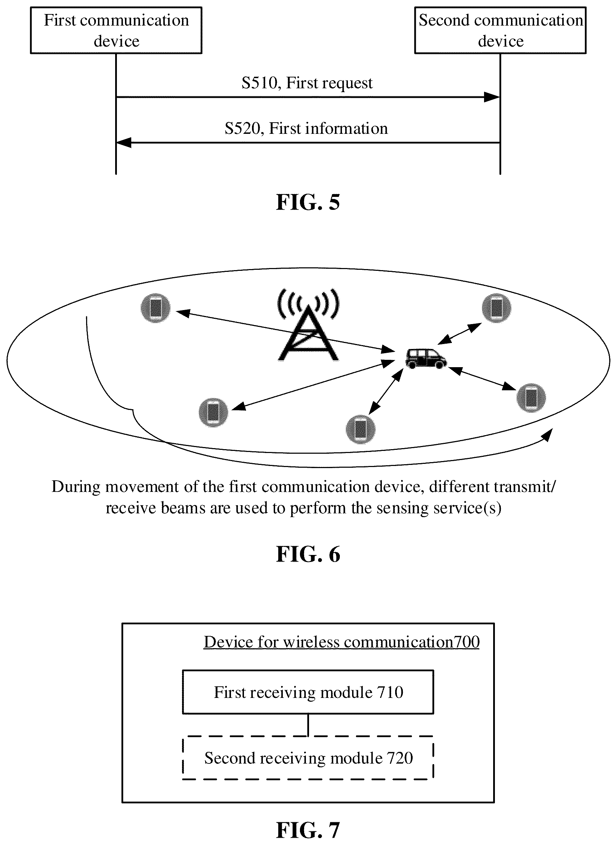

In some embodiments, the acquisition or update of the first information may be performed based on a request from the first communication device. FIG. 5 is a schematic flowchart of a method for wireless communication according to yet another embodiment of the present disclosure. With reference to FIG. 5, the method in FIG. 5 may include operations S510 and S520.

At operation S510, a first communication device transmits a first request. The first request is used to acquire or update first information.

In some embodiments, the first request may be transmitted by the first communication device to a second communication device.

In some embodiments, the first request may be carried in one or more of the following signaling: MAC CE signaling, NAS signaling, RRC signaling, SCI, and an interface between access network devices. Taking the first communication device to be the terminal device and the second communication device to be the access network device as an example, the first request may be carried in uplink MAC CE signaling or uplink RRC signaling. Of course, in some embodiments, the first request may also be carried in Uplink Control Information (UCI). Taking the first communication device to be the terminal device and the second communication device to be the core network device as an example, the first request may be carried in uplink NAS signaling.

In some embodiments, the first request being used to acquire or update the first information may mean that the first request may be used to acquire or update multiple pieces of candidate beam indication information. In some embodiments, the first request being used to acquire or update the first information may mean that the first request may be used to acquire or update the beam indication information (i.e., first beam indication information) currently applied to the first communication device.

In some embodiments, after receiving the first request transmitted by the first communication device, the second communication device may transmit or update the first information for the first communication device, for example, updating the multiple pieces of candidate beam indication information, or updating the beam indication information currently applied to the first communication device, and the like.

In various cases, the first communication device may transmit the first request to acquire or update the first information. The case where the first communication device transmits the first request is not limited in the embodiments of the present disclosure. Exemplarily, in the case of a change of the channel state or a change of the state of the first communication device, the first communication device may transmit the first request.

As an example, when the channel state changes or the change of the channel state is greater than a certain threshold, the first communication device may transmit the first request. The type of the change of the channel state is not limited in the embodiments of the present disclosure. For example, the first communication device may transmit the first request, upon degradation of the line of sight (LOS) condition (e.g., a LOS value indicates a decrease) of the sensing signal received through a certain channel.

As another example, when the state of the first communication device changes or the change of the state of the first communication device is greater than a certain threshold, the first communication device may transmit the first request. The type of the change of the state of the first communication device is not limited in the embodiments of the present disclosure. For example, the first communication device may transmit the first request, when a location of the first communication device changes or the change of the location of the first communication device exceeds a certain threshold. Alternatively, the first communication device may transmit the first request, when a cell Reference Signal Receiving Power (RSRP) of a serving cell of the first communication device changes or the change of the cell RSRP of the serving cell of the first communication device exceeds a certain threshold, etc.

At operation S520, the first communication device receives the first information.

The detailed description of the operation S520 may be referred to the description of the operation S310 or S410 in the foregoing, which will not be repeated herein for the sake of brevity.

In some embodiments, in the case that the first information includes the multiple pieces of candidate beam indication information, the first communication device may further receive second information, and the second information may be used to indicate the first beam indication information. In other words, the second information may be used to indicate activation of using the first beam indication information, or to indicate activation of using the beam (first beam) corresponding to the first beam indication information.

In some embodiments, the second communication device may update the first information, e.g., actively update the first information. As an implementation, through instant RRC signaling or instant MAC CE signaling, the second communication device may update the first information (e.g., update the multiple pieces of candidate beam indication information of the first communication device, or update the beam indication information currently used by the first communication device).

In some embodiments, the change or update of the first beam (or the change or update of the first information) may occur in a case where a relative location between the first communication device and the sensing target changes. For example, the change or update of the first beam may occur in the case where the location of the first communication device changes. For another example, the change or update of the first beam may occur in the case where the location of the sensing target changes. For another example, the change or update of the first beam may occur in the case where both of the location of the first communication device and the location of the sensing target change.

In some embodiments, the beam indication information for transmitting or receiving the sensing signal may be associated with multiple types of information. For example, the beam indication information used to transmit or receive the sensing signal may be associated with (corresponding to) one or more of the following: geographic location information, and time-domain resource information.

In some embodiments, it may also be understood that the first information may be associated with multiple types of information. For example, the first information may be associated with one or more of the following: a first geographic location, and a first time-domain resource.

Taking the first information to include multiple pieces of candidate beam indication information as an example, the multiple pieces of candidate beam indication information may be associated with different geographic locations and/or different time-domain resources.

That is, the beam indication information used to transmit or receive the sensing signal may have binding relationships with different geographical locations or different time-domain resources, i.e., each of the different geographical locations may be bound with a respective one of the different beams used to transmit or receive the sensing signal; or each of the different time-domain resources may be bound with a respective one of the different beams used to transmit or receive the sensing signal.

In a scenario where the first communication device moves, the first communication device may move between different geographic locations (multiple geographic locations). The different geographic locations may include the first geographic location, and the first geographic location may correspond to the first beam (or first beam indication information).

In some embodiments, there may be an association or correspondence between one of the different geographic locations and the beam (or the beam indication information) used to transmit or receive the sensing signal. In such way, when the first communication device moves to different geographical locations, the beam corresponding to the geographical location to which the first communication device moves may be used to transmit or receive the sensing signal. In other words, when the first communication device moves to different geographical locations, different beams may be used to transmit or receive the sensing signal. FIG. 6 illustrates one example of using different beams to transmit or receive the sensing signal during the movement of the first communication device.

In some embodiments, one of the different geographic locations may correspond to one beam used to transmit or receive the sensing signal. That is, there may be a one-to-one correspondence between the geographical locations and the beams used to transmit or receive the sensing signal. In such way, when the first communication device moves to different geographical locations, the unique beam corresponding to the geographical location may be directly used to transmit or receive the sensing signal.

In some embodiments, one of the different geographic locations may correspond to multiple beams used to transmit or receive the sensing signal. That is, there may be a one-to-many correspondence between the geographical location and the beams used to transmit or receive the sensing signal.

In some embodiments, in the case that one geographic location corresponds to multiple beams used to transmit or receive the sensing signal, the first communication device may further receive activation information. The activation information may be used to indicate one of the multiple beams used to transmit or receive the sensing signal corresponding to the one geographic location. Thus, the first communication device can transmit or receive the sensing signal based on the beam corresponding to the activation information.

In some embodiments, the first communication device may determine a beam used to transmit or receive the sensing signal based on a geographic location range in which the first communication device currently resides. For example, the first communication device may determine the first beam indication information based on the geographic location range in which the first communication device currently resides.

In some embodiments, the association or correspondence between the geographic locations and the beams used to transmit or receive the sensing signal may be preconfigured. For example, the association or correspondence may be preconfigured by the network; or, may be preconfigured by the second communication device, etc.

The division granularity of the range of different geographical locations (or the first geographical location) is not limited in the embodiments of the present disclosure. Exemplarily, the range of different geographic locations may be determined based on one or more of the following granularities: a cell, an SSB, a RAN-based Notification Area (RNA), a Tracking Area (TA), and a TA list. That is, the range of different geographical locations may be distinguished based on different cells, different SSBs, different RNAs, or different TAs or TA lists. Of course, the embodiments of the present disclosure are not limited thereto, and in some embodiments, the range of different geographical locations may be determined by a mixture of different area units. For example, the range of different geographical locations may be distinguished by a mixture of the cell and the SSB, or the range of different geographical locations may be distinguished by a mixture of the cell, the RNA, the TA, etc.

In some embodiments, the first communication device may determine the beam used to transmit or receive the sensing signal based on one or more of the following: an ID of a cell that is currently resided or accessed, an RNA ID, a TA ID, an SSB with a highest measurement result for a current wireless signal, and an SSB selected by the first communication device. For example, the first communication device may determine the beam used to transmit or receive the sensing signal, based on the ID of the cell that is currently resided or accessed. Alternatively, the first communication device may determine the beam used to transmit or receive the sensing signal, based on the ID of the RAN in which the first communication device currently resides or accesses. Alternatively, the first communication device may determine the beam used to transmit or receive the sensing signal based on the ID of the cell that is currently resided or accessed as well as the TA ID, etc.

In some embodiments, different geographical locations corresponding to different beams used to transmit or receive the sensing signal, may mean that different geographical locations correspond to different TCI states. For example, the reference signals (e.g., IDs of the reference signals) included in the TCI states may be different.

In some embodiments, the reference signal included in the TCI state may be transmitted by the serving cell of the first communication device. In some embodiments, the reference signal included in the TCI state may be transmitted by other serving cells.

### Second embodiment

In the second embodiment, the first information may be used to indicate location information of the sensing target. There are many implementations for using the first information to indicate the location information of the sensing target, which are not limited in the embodiments of the present disclosure. In some embodiments, the first information may be used to directly indicate the location information of the sensing target. For example, the first information may include the location information of the sensing target. In some embodiments, the first information may be used to indirectly indicate the location information of the sensing target. For example, the first information may indirectly indicate the location information of the sensing target by using location information of a communication device in the vicinity of the sensing target or location information of a communication device carried by the sensing target.

In order to facilitate understanding, two specific implementations for using the first information to indicate the location information of the sensing target are provided below.

### First implementation: directly indicating the location information of the sensing target

As an implementation, the first information may include the location information of the sensing target, to enable the first communication device to determine, based on the location information of the sensing target, the beam used to transmit or receive the sensing signal.

In some embodiments, the first information including the location information of the sensing target may mean that the first information may include physical location information of the sensing target.

The representation manner for the physical location information of the sensing target is not limited in the embodiments of the present disclosure. In some embodiments, the physical location information of the sensing target may be represented in a manner of absolute coordinates or relative coordinates. In some embodiments, the physical location information of the sensing target may be represented by using latitude and longitude coordinates of the sensing target. In some embodiments, the physical location information of the sensing target may be represented in a manner of polar coordinates, etc.

In some embodiments, the first information including the location information of the sensing target may mean that the first information may include information of a location area at which the sensing target is located. For example, the first information may include an ID (zone ID) of the location area at which the sensing target is located.

In some embodiments, the location area at which the sensing target is located may be predefined, e.g., may be predefined in the protocol.

The specific division manner for the location area at which the sensing target is located is not limited in the embodiments of the present disclosure. For example, the location area at which the sensing target is located may be divided based on the cell. Alternatively, the location area at which the sensing target is located may be divided based on the tracking area (TA). Alternatively, the location area at which the sensing target is located may be divided based on the SSB, etc.

In such way, the first communication device may determine a suitable beam used to transmit or receive the sensing signal, based on its own location information and the location information of the sensing target.

The specific manner for the first communication device to acquire its own location information is not limited in the embodiments of the present disclosure. For example, the first communication device may acquire its own location information through a Global Navigation Satellite System (GNSS). Alternatively, the first communication device may acquire its own location information based on some positioning methods, such as, a positioning method depending on a Radio Access Technology (RAT), or the like. The positioning method depending on the RAT is not limited in the embodiments of the present disclosure. For example, the positioning method depending on the RAT may include a positioning method based on a downlink arrival time difference, a positioning method based on an uplink arrival time difference, a positioning method based on a multi-cell Round Trip Time (RTT), and the like.

### Second implementation: indirectly indicating the location information of the sensing target

As an implementation, the first information may include information related to a third communication device, and the information related to the third communication device may be used for the first communication device to determine the location information of the sensing target. In other words, the information related to the third communication device may be used for the first communication device to determine the beam used to transmit or receive the sensing signal. In some embodiments, the third communication device may also be referred to as a third party device, a label device, or the like. For example, the third communication device may be a third party UE, a label UE, or the like.

It is to be noted that the third communication device is not the transmitting end or the receiving end of the sensing signal, and the third communication device is similar to a label in the sensing procedure, which can simplify some process flows.

In some embodiments, the third communication device may be a communication device in the vicinity of the sensing target. For example, the third communication device may be a communication device whose distance from the sensing target is less than a certain threshold, such as, less than 500 meters, less than 300 meters, or the like.

In some embodiments, the third communication device may be a communication device carried by the sensing target. For example, when the sensing target is a car, the third communication device may be, e.g., an in-vehicle terminal in the car, or the like.

The specific content of the information related to the third communication device is not limited in the embodiments of the present disclosure, as long as the information related to the third communication device can be used for the first communication device to determine the location information of the sensing target. Exemplarily, the information related to the third communication device may include one or more of the following: beam indication information corresponding to a communication link between the third communication device and the first communication device; and ID information of the third communication device.

As an example, the information related to the third communication device may include the beam indication information corresponding to the communication link between the third communication device and the first communication device. Taking the third communication device and the first communication device both to be the terminal devices as an example, the information related to the third communication device may include, for example, beam indication information (e.g., TCI state information) on a sidelink between the two terminal devices. In such way, based on the beam indication information corresponding to the communication link between the third communication device and the first communication device, the first communication device may transmit or receive the sensing signal by using the beam corresponding to the beam indication information, so as to align with the sensing target.

As another example, the information related to the third communication device may include the ID information of the third communication device. Based on the ID information of the third communication device, the first communication device may discover the third communication device or may establish a communication link with the third communication device. Then, the first communication device may autonomously estimate, according to measurement, the beam used to transmit or receive the sensing signal. Taking the third communication device and the first communication device both to be the terminal devices as an example, based on the ID information of the third communication device, the first communication device may further autonomously estimate, according to the measurement, the beam used to for transmitting or receiving the sensing signal by discovering the third communication device on the sidellink or establishing the sidelink (e.g., unicast sidelink) with the third communication device.

As an example, the information related to the third communication device may include: the beam indication information corresponding to the communication link between the third communication device and the first communication device, and the ID information of the third communication device.

In some embodiments, the information related to the third communication device may be configured for the first communication device by the network side.

In some embodiments, the information related to the third communication device may be configured for the first communication device by the second communication device.

The first communication device may determine the location information of the sensing target by using the information related to the third communication device, which is conducive for the first communication device to better align with the sensing target. Thus, the sensing signal can be better directed to the sensing target.

The method embodiments of the present disclosure are described in detail above with reference to FIGS. 1 to 6, and the device embodiments of the present disclosure are described in detail below with reference to FIGS. 7 to 9. It is to be understood that the method embodiments correspond to the device embodiments, and the portions not described in detail of the device embodiments may refer to the aforementioned method embodiments.

FIG. 7 is a schematic structural diagram of a device for wireless communication according to an embodiment of the present disclosure. The device for wireless communication 700 illustrated in FIG. 7 may be the first communication device described in any of the foregoing. The device for wireless communication 700 includes a first receiving module 710.

The first receiving module 710 is configured to receive first information, where the first information is used to determine a first beam, and the first beam is used to transmit or receive a sensing signal.

Optionally, the first information may include first beam indication information corresponding to the first beam.

Optionally, the first information may be different from second beam indication information used for the first communication device to transmit or receive a communication signal.

Optionally, the first information may be the same as the second beam indication information used for the first communication device to transmit or receive the communication signal.

Optionally, the first information may be associated with one or more of the following: a first geographic location, and a first time-domain resource.

Optionally, the first information may include multiple pieces of candidate beam indication information, the multiple pieces of candidate beam indication information may be associated with different geographic locations or different time-domain resources, and one of the different geographic locations may correspond to one beam used to transmit or receive the sensing signal.

Optionally, a range of the first geographic location may be determined based on one or more of the following granularities: a cell, an SSB, an RNA, a TA, and a tracking area list.

Optionally, the device 700 may further include a determination module. The determining module is configured to determine the beam used to transmit or receive the sensing signal based on one or more of the following: an ID of a cell that is currently resided or accessed, an RNA ID, a TA ID, an SSB with a highest measurement result for a current wireless signal, and an SSB selected by the first communication device.

Optionally, the first information may include the multiple pieces of candidate beam indication information. The device 700 may further include a second receiving module 720. The second receiving module 720 may be configured to receive second information, where the second information is used to indicate activation of using the first beam indication information.

Optionally, the first beam indication information may belong to the multiple pieces of candidate beam indication information.

Optionally, the second information may be carried in first signaling, and the first signaling may include one or more of the following: MAC CE signaling, RRC signaling, SCI, and an interface between access network devices.

Optionally, the first signaling may be different from second signaling. Herein, the second signaling may be used to carry the second beam indication information for the first communication device to transmit or receive the communication signal.

Optionally, the first information may be preconfigured by the second communication device.

Optionally, the first beam indication information may include one or more of the following configurations: an ID of a TCI state, an ID of a QCL reference signal, and a QCL type.

Optionally, the first information may be carried in one or more of the following: NAS signaling, RRC signaling, MAC CE signaling, and an interface between access network devices.

Optionally, the device 700 may further include a transmission module. The transmission module may be configured to transmit a first request, where the first request is used to acquire or update the first information.

Optionally, the first information may be used to indicate location information of a sensing target.

Optionally, the first information may include the location information of the sensing target.

Optionally, the first information may include information related to a third communication device, and the information related to the third communication device may be used for the first communication device to determine the beam used to transmit or receive the sensing signal.

Optionally, the information related to the third communication device may include one or more of the following: beam indication information corresponding to a communication link between the third communication device and the first communication device; and ID information of the third communication device.

Optionally, the first communication device may be a terminal device, and the transmitting end of the first information may be the second communication device. The second communication device may be one of the following: an access network device, a core network device, or a terminal device.

Optionally, the first communication device may be an access network device, and the transmitting end of the first information may be the second communication device. The second communication device may be an access network device or a core network device.

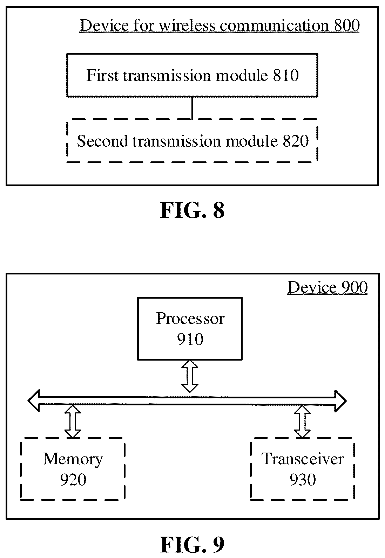

Optionally, the first receiving module 710 may be a transceiver 930. The device for wireless communication 700 may further include a processor 910 and a memory 920, as specifically illustrated in FIG. 9.

FIG. 8 is a schematic structural diagram of a device for wireless communication according to another embodiment of the present disclosure. The device for wireless communication 800 illustrated in FIG. 8 may be the second communication device described in any of the foregoing. The device for wireless communication 800 includes a first transmission module 810.

The first transmission module 810 is configured to transmit first information, where the first information is used to determine a first beam, and the first beam is used to transmit or receive a sensing signal.

Optionally, the first information may include first beam indication information corresponding to the first beam.

Optionally, the receiving end of the first information may be a first communication device. The first information may be different from second beam indication information used for the first communication device to transmit or receive a communication signal.

Optionally, the receiving end of the first information may be a first communication device. The first information may be the same as second beam indication information used for the first communication device to transmit or receive the communication signal.

Optionally, the first information may be associated with one or more of the following: a first geographic location, and a first time-domain resource.

Optionally, the first information may include multiple pieces of candidate beam indication information, the multiple pieces of candidate beam indication information may be associated with different geographic locations or different time-domain resources, and one of the different geographic locations may correspond to one beam used to transmit or receive the sensing signal.

Optionally, a range of the first geographic location may be determined based on one or more of the following granularities: a cell, an SSB, an RNA, a TA, and a tracking area list.

Optionally, the beam used to transmit or receive the sensing signal may be determined based on one or more of the following: an ID of a cell that is resided or accessed, an RNA ID, a TA ID, an SSB with a highest measurement result for a current wireless signal, and an SSB selected by a first communication device. The first communication device may be the receiving end of the first information.

Optionally, the first information may include the multiple pieces of candidate beam indication information. The device 800 may further include a second transmission module 820. The second transmission module 820 may be configured to transmit second information, where the second information is used to indicate activation of using the first beam indication information.

Optionally, the first beam indication information may belong to the multiple pieces of candidate beam indication information.

Optionally, the second information may be carried in first signaling, and the first signaling may include one or more of the following: MAC CE signaling, RRC signaling, SCI, and an interface between access network devices.

Optionally, the first signaling may be different from second signaling. Herein, the second signaling may be used to carry the second beam indication information for the communication signal.

Optionally, the first information may be preconfigured by the second communication device.

Optionally, the first beam indication information may include one or more of the following configurations: an ID of a TCI state, an ID of a QCL reference signal, and a QCL type.

Optionally, the first information may be carried in one or more of the following: NAS signaling, RRC signaling, MAC CE signaling, and an interface between access network devices.

Optionally, the device 800 may further include a receiving module. The receiving module may be configured to receive a first request, where the first request is used to acquire or update the first information.

Optionally, the first information may be used to indicate location information of a sensing target.

Optionally, the first information may include the location information of the sensing target.

Optionally, the first information may include information related to a third communication device, and the information related to the third communication device may be used for a first communication device to determine the beam used to transmit or receive the sensing signal. The first communication device may be the receiving end of the first information.

Optionally, the information related to the third communication device may include one or more of the following: beam indication information corresponding to a communication link between the third communication device and the first communication device; and ID information of the third communication device.

Optionally, the receiving end of the first information may be the first communication device. The first communication device may be a terminal device, and the second communication device may be one of the following: an access network device, a core network device, or a terminal device.

Optionally, the receiving end of the first information may be the first communication device. The first communication device may be an access network device, and the second communication device may be an access network device or a core network device.

Optionally, the first transmission module 810 may be a transceiver 930. The device for wireless communication 800 may further include a processor 910 and a memory 920, as specifically illustrated in FIG. 9.

FIG. 9 is a schematic structural diagram of a communication device according to an embodiment of the present disclosure. The dashed line in FIG. 9 indicates that the unit or module is optional. The device 900 may be used to implement each of the methods described in the aforementioned method embodiments. The device 900 may be a chip, a terminal device, or a network device.

The device 900 may include one or more processors 910. The processor 910 may support the device 900 to implement each of the methods described in the aforementioned method embodiments. The processor 910 may be a general-purpose processor or a special-purpose processor. For example, the processor may be a Central Processing Unit (CPU). Alternatively, the processor may also be another general purpose processor, a Digital Signal Processor (DSP), an Application Specific Integrated Circuit (ASIC), a Field Programmable Gate Array (FPGA) or another programmable logic device, a discrete gate or transistor logic device, a discrete hardware component, or the like. The general purpose processor may be a microprocessor or the processor may be any conventional processor or the like.

The device 900 may also include one or more memories 920. The memory 920 has stored a program thereon, and the program is executable by the processor 910 to cause the processor 910 to perform each of the methods described in the aforementioned method embodiments. The memory 920 may be independent of the processor 910 or may be integrated in the processor 910.

The device 900 may also include a transceiver 930. The processor 910 may communicate with other devices or chips through the transceiver 930. For example, through the transceiver 930, the processor 910 may transmit data to other devices or chips, and receive data from other devices or chips.

An embodiment of the present disclosure further provides a computer-readable storage medium configured to store a program. The computer-readable storage medium may be applied to the terminal device or the network device in the embodiments of the present disclosure, and the computer program causes a computer to perform each of the methods performed by the terminal device or the network device in various embodiments of the present disclosure.

An embodiment of the present disclosure further provides a computer program product. The computer program product includes programs. The computer program product may be applied to the terminal device or the network device in the embodiments of the present disclosure, and the programs cause a computer to perform each of the methods performed by the terminal device or the network device in various embodiments of the present disclosure.

An embodiment of the present disclosure further provides a computer program. The computer program may be applied to the terminal device or the network device in the embodiments of the present disclosure, and the computer program causes a computer to perform each of the methods performed by the terminal device or the network device in various embodiments of the present disclosure.

It is to be understood that the terms "system" and "network" can be used interchangeably herein. In addition, the terms used in the embodiments of the present disclosure are used only for explanation of specific embodiments of the present disclosure, and such terms are not intended to limit the present disclosure. The terms "first", "second", "third", "fourth" and the like in the description and claims of the present disclosure as well as the accompanying drawings are used to distinguish different objects, but not used to describe a particular sequence. Furthermore, the terms "including" and "having" and any variations thereof are intended to cover non-exclusive inclusion.

In the embodiments of the present disclosure, the reference to "indication" may be a direct indication, may be an indirect indication, or may be indicative of an association. For example, A indicates B, which may mean that A directly indicates B, e.g., B may be obtained through A; which may also mean that A indirectly indicates B, e.g., A indicates C, and B may be obtained by C; and which may further indicate that there is an association between A and B.

In the embodiments of the present disclosure, the expression "B corresponding to A" means that B is associated with A, and B may be determined based on A. However, it is also to be understood that "determining B based on A" does not mean that B is determined based on A alone, but that B may also be determined based on A and/or other information.

In the embodiments of the present disclosure, the term "correspond" may mean that there is a direct correspondence or an indirect correspondence between two objects, may also mean that there is an association relationship between the two objects, and may also be a relationship between indication and being indicated, configuration and being configured, and the like.

In the embodiments of the present disclosure, the "predefined" or "preconfigured" may be implemented by pre-storing corresponding codes, tables, or by other means that may be used to indicate relevant information in devices (such as terminal devices and network devices), and the specific implementations of which are not limited in the present disclosure. For example, the "predefined" may refer to what is defined in a protocol.

In the embodiments of the present disclosure, the "protocol" may be a standard protocol in the communication field, such as an LTE protocol, an NR protocol, and related protocols applied in future communication systems, which is not limited in the present disclosure.

In the embodiments of the present disclosure, the term "and/or" only indicates an association relationship for describing associated objects and represents that there are three relationships. For example, A and/or B may represent three conditions: i.e., independent existence of A, existence of both A and B and independent existence of B. In addition, the character "/" in the present disclosure typically represents that previous and next associated objects form an "or" relationship.

In various embodiments of the present disclosure, the size of sequence number(s) of the aforementioned processes do not imply the sequence(s) of execution. The sequence of execution of each process should be determined according to the functions and internal logic thereof, and should not constitute any limitation on the implementation processes of the embodiments of the present disclosure.

In the several embodiments provided in the present disclosure, it is to be understood that the disclosed system, devices, and methods may be implemented in other manners. For example, the device embodiments described above are only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, that is, may be located in one place or may be distributed over multiple network units. Some or all of the units may be selected according to actual needs, to achieve the objectives of the schemes of the embodiments of the present disclosure.

In addition, functional units in various embodiments of the present disclosure may be integrated into one processing unit, or each of the units may be physically separated, or two or more units may be integrated into one unit.

The aforementioned embodiments may be implemented in whole or in part by software, hardware, firmware or any combination thereof. When implemented in software, the aforementioned embodiments may be implemented in whole or in part in the form of a computer program product. The computer program product includes one or more computer instructions. When the computer program instructions are loaded and executed on a computer, the flows or functions may be generated in whole or in part according to the embodiments of the present disclosure. The computer may be a general purpose computer, a dedicated computer, a computer network, or other programmable devices. The computer instructions may be stored in a computer-readable storage medium or transmitted from one computer-readable storage medium to another computer-readable storage medium. For example, the computer instructions may be transmitted from one Web site, computer, server, or data center to another Web site, computer, server, or data center in a wired (e.g., coaxial cable, optical fiber, digital subscriber line (DSL)) manner or a wireless (e.g., infrared, wireless, microwave, etc.) manner. The computer-readable storage medium may be any available medium that a computer may access, or may be a data storage device that is integrated with one or more available media, such as a server, a data center, or the like. The available medium may be a magnetic medium (e.g., floppy disk, hard disk, magnetic tape), an optical medium (e.g., digital video disc (DVD)), or a semiconductor medium (e.g., solid state disk (SSD)), etc.

The foregoing descriptions are merely specific implementations of the present disclosure, but are not intended to limit the scope of protection of the present disclosure. Any variation or replacement readily figured out by those skilled in the art within the technical scope disclosed in the present disclosure shall fall within the scope of protection of the present disclosure. Therefore, the scope of protection of the present disclosure shall be subject to the scope of protection of the claims.

## Claims

1. A method for wireless communication, comprising:
receiving, by a first communication device, first information, wherein the first information is used to determine a first beam, and the first beam is used to transmit or receive a sensing signal.

2. The method of claim 1, wherein the first information comprises first beam indication information corresponding to the first beam.

3. The method of claim 2, wherein the first information is different from second beam indication information used for the first communication device to transmit or receive a communication signal.

4. The method of claim 2, wherein the first information is the same as second beam indication information used for the first communication device to transmit or receive a communication signal.

5. The method of any one of claims 2 to 4, wherein the first information is associated with one or more of the following: a first geographic location and a first time-domain resource.

6. The method of any one of claims 2 to 5, wherein the first information comprises a plurality of pieces of candidate beam indication information, the plurality of pieces of candidate beam indication information are associated with different geographic locations or different time-domain resources, and one of the different geographic locations corresponds to one beam used to transmit or receive the sensing signal.

7. The method of claim 5, wherein a range of the first geographic location is determined based on one or more of the following granularities: a cell, a Synchronization Signal Block (SSB), a Radio Access Network (RAN)-based Notification Area (RNA), a Tracking Area (TA), and a tracking area list.

8. The method of any one of claims 5 to 7, further comprising:
determining, by the first communication device, a beam used to transmit or receive the sensing signal based on one or more of the following: an Identifier (ID) of a cell that is currently resided or accessed, an RNA ID, a TA ID, an SSB with a highest measurement result for a current wireless signal, and an SSB selected by the first communication device.

9. The method of any one of claims 2 to 8, wherein the first information comprises a plurality of pieces of candidate beam indication information, and the method further comprises:
receiving, by the first communication device, second information, wherein the second information is used to indicate activation of using the first beam indication information.

10. The method of claim 9, wherein the first beam indication information belongs to the plurality of pieces of candidate beam indication information.

11. The method of claim 9 or 10, wherein the second information is carried in first signaling, and the first signaling comprises one or more of the following: Medium Access Control (MAC) Control Element (CE) signaling, Radio Resource Control (RRC) signaling, Sidelink Control Information (SCI), and an interface between access network devices.

12. The method of claim 11, wherein the first signaling is different from second signaling, and the second signaling is used to carry second beam indication information for the first communication device to transmit or receive a communication signal.

13. The method of any one of claims 2 to 12, wherein the first information is preconfigured by a second communication device.

14. The method of any one of claims 2 to 13, wherein the first beam indication information comprises one or more of the following configurations: an identifier (ID) of a Transmission Configuration Indicator (TCI) state, an ID of a Quasi-Co-Location (QCL) reference signal, and a QCL type.

15. The method of any one of claims 2 to 14, wherein the first information is carried in one or more of the following: Non-Access Stratum (NAS) signaling, Radio Resource Control (RRC) signaling, Medium Access Control (MAC) Control Element (CE) signaling, and an interface between access network devices.

16. The method of any one of claims 2 to 15, further comprising:
transmitting, by the first communication device, a first request, wherein the first request is used to acquire or update the first information.

17. The method of claim 1, wherein the first information is used to indicate location information of a sensing target.

18. The method of claim 17, wherein the first information comprises the location information of the sensing target.

19. The method of claim 17, wherein the first information comprises information related to a third communication device, and the information related to the third communication device is used for the first communication device to determine a beam used to transmit or receive the sensing signal.

20. The method of claim 19, wherein the information related to the third communication device comprises one or more of the following:
beam indication information corresponding to a communication link between the third communication device and the first communication device; and
identifier (ID) information of the third communication device.

21. The method of any one of claims 1 to 20, wherein the first communication device is a terminal device, a transmitting end of the first information is a second communication device, and the second communication device is one of the following: an access network device, a core network device, or a terminal device.

22. The method of any one of claims 1 to 20, wherein the first communication device is an access network device, a transmitting end of the first information is a second communication device, and the second communication device is an access network device or a core network device.

23. A method for wireless communication, comprising:
transmitting, by a second communication device, first information, wherein the first information is used to determine a first beam, and the first beam is used to transmit or receive a sensing signal.

24. The method of claim 23, wherein the first information comprises first beam indication information corresponding to the first beam.

25. The method of claim 24, wherein a receiving end of the first information is a first communication device, and the first information is different from second beam indication information used for the first communication device to transmit or receive a communication signal.

26. The method of claim 24, wherein a receiving end of the first information is a first communication device, and the first information is the same as second beam indication information used for the first communication device to transmit or receive a communication signal.

27. The method of any one of claims 24 to 26, wherein the first information is associated with one or more of the following: a first geographic location and a first time-domain resource.

28. The method of any one of claims 2 to 27, wherein the first information comprises a plurality of pieces of candidate beam indication information, the plurality of pieces of candidate beam indication information are associated with different geographic locations or different time-domain resources, and one of the different geographic locations corresponds to one beam used to transmit or receive the sensing signal.

29. The method of claim 27, wherein a range of the first geographic location is determined based on one or more of the following granularities: a cell, a Synchronization Signal Block (SSB), a Radio Access Network (RAN)-based Notification Area (RNA), a Tracking Area (TA), and a tracking area list.

30. The method of any one of claims 27 to 29, wherein the beam used to transmit or receive the sensing signal is determined based on one or more of the following: an Identifier (ID) of a cell that is resided or accessed, an RNA ID, a TA ID, an SSB with a highest measurement result for a current wireless signal, and an SSB selected by a first communication device; and the first communication device is a receiving end of the first information.

31. The method of any one of claims 24 to 30, wherein the first information comprises a plurality of pieces of candidate beam indication information, and the method further comprises:
transmitting, by the second communication device, second information, wherein the second information is used to indicate activation of using the first beam indication information.

32. The method of claim 31, wherein the first beam indication information belongs to the plurality of pieces of candidate beam indication information.

33. The method of claim 31 or 32, wherein the second information is carried in first signaling, and the first signaling comprises one or more of the following: Medium Access Control (MAC) Control Element (CE) signaling, Radio Resource Control (RRC) signaling, Sidelink Control Information (SCI), and an interface between access network devices.

34. The method of claim 33, wherein the first signaling is different from second signaling, and the second signaling is used to carry second beam indication information for a communication signal.

35. The method of any one of claims 24 to 34, wherein the first information is preconfigured by the second communication device.

36. The method of any one of claims 24 to 35, wherein the first beam indication information comprises one or more of the following configurations: an identifier (ID) of a Transmission Configuration Indicator (TCI) state, an ID of a Quasi-Co-Location (QCL) reference signal, and a QCL type.

37. The method of any one of claims 24 to 36, wherein the first information is carried in one or more of the following: Non-Access Stratum (NAS) signaling, Radio Resource Control (RRC) signaling, Medium Access Control (MAC) Control Element (CE) signaling, and an interface between access network devices.

38. The method of any one of claims 24 to 37, further comprising:
receiving, by the second communication device, a first request, wherein the first request is used to acquire or update the first information.

39. The method of claim 23, wherein the first information is used to indicate location information of a sensing target.

40. The method of claim 39, wherein the first information comprises the location information of the sensing target.

41. The method of claim 39, wherein the first information comprises information related to a third communication device, the information related to the third communication device is used for a first communication device to determine a beam used to transmit or receive the sensing signal, and the first communication device is a receiving end of the first information.

42. The method of claim 41, wherein the information related to the third communication device comprises one or more of the following:
beam indication information corresponding to a communication link between the third communication device and the first communication device; and
identifier (ID) information of the third communication device.

43. The method of claim 23 to 42, wherein a receiving end of the first information is a first communication device, the first communication device is a terminal device, and the second communication device is one of the following: an access network device, a core network device, or a terminal device.

44. The method of claim 23 to 42, wherein a receiving end of the first information is a first communication device, the first communication device is an access network device, and the second communication device is the access network device or a core network device.

45. A device for wireless communication, wherein the device for wireless communication is a first communication device, and the device for wireless communication comprises:
a first receiving module, configured to receive first information, wherein the first information is used to determine a first beam, and the first beam is used to transmit or receive a sensing signal.

46. The device of claim 45, wherein the first information comprises first beam indication information corresponding to the first beam.

47. The device of claim 46, wherein the first information is different from second beam indication information used for the first communication device to transmit or receive a communication signal.

48. The device of claim 46, wherein the first information is the same as second beam indication information used for the first communication device to transmit or receive a communication signal.

49. The device of any one of claims 46 to 48, wherein the first information is associated with one or more of the following: a first geographic location and a first time-domain resource.

50. The device of any one of claims 46 to 49, wherein the first information comprises a plurality of pieces of candidate beam indication information, the plurality of pieces of candidate beam indication information are associated with different geographic locations or different time-domain resources, and one of the different geographic locations corresponds to one beam used to transmit or receive the sensing signal.

51. The device of claim 49, wherein a range of the first geographic location is determined based on one or more of the following granularities: a cell, a Synchronization Signal Block (SSB), a Radio Access Network (RAN)-based Notification Area (RNA), a Tracking Area (TA), and a tracking area list.

52. The device of claim 49 to 51, further comprising:
a determination module, configured to determine a beam used to transmit or receive the sensing signal based on one or more of the following: an Identifier (ID) of a cell that is resided or accessed, an RNA ID, a TA ID, an SSB with a highest measurement result for a current wireless signal, and an SSB selected by the first communication device.

53. The device of any one of claims 46 to 52, wherein the first information comprises a plurality of pieces of candidate beam indication information, and the device further comprises:
a second receiving module, configured to receive second information, wherein the second information is used to indicate activation of using the first beam indication information.

54. The device of claim 53, wherein the first beam indication information belongs to the plurality of pieces of candidate beam indication information.

55. The device of claim 53 or 54, wherein the second information is carried in first signaling, and the first signaling comprises one or more of the following: Medium Access Control (MAC) Control Element (CE) signaling, Radio Resource Control (RRC) signaling, Sidelink Control Information (SCI), and an interface between access network devices.

56. The device of claim 55, wherein the first signaling is different from second signaling, and the second signaling is used to carry second beam indication information for the first communication device to transmit or receive a communication signal.

57. The device of any one of claims 46 to 56, wherein the first information is preconfigured by a second communication device.

58. The device of any one of claims 46 to 57, wherein the first beam indication information comprises one or more of the following configurations: an identifier (ID) of a Transmission Configuration Indicator (TCI) state, an ID of a Quasi-Co-Location (QCL) reference signal, and a QCL type.

59. The device of any one of claims 46 to 58, wherein the first information is carried in one or more of the following: Non-Access Stratum (NAS) signaling, Radio Resource Control (RRC) signaling, Medium Access Control (MAC) Control Element (CE) signaling, and an interface between access network devices.

60. The device of claim 46 to 59, further comprising:
a transmission module, configured to transmit a first request, wherein the first request is used to acquire or update the first information.

61. The device of claim 45, wherein the first information is used to indicate location information of a sensing target.

62. The device of claim 61, wherein the first information comprises the location information of the sensing target.

63. The device of claim 61, wherein the first information comprises information related to a third communication device, and the information related to the third communication device is used for the first communication device to determine a beam used to transmit or receive the sensing signal.

64. The device of claim 63, wherein the information related to the third communication device comprises one or more of the following:
beam indication information corresponding to a communication link between the third communication device and the first communication device; and
identifier (ID) information of the third communication device.

65. The device of any one of claims 45 to 64, wherein the first communication device is a terminal device, a transmitting end of the first information is a second communication device, and the second communication device is one of the following: an access network device, a core network device, or a terminal device.

66. The device of any one of claims 45 to 64, wherein the first communication device is an access network device, a transmitting end of the first information is a second communication device, and the second communication device is an access network device or a core network device.

67. A device for wireless communication, wherein the device for wireless communication is a second communication device, and the device for wireless communication comprises:
a first transmission module, configured to transmit first information, wherein the first information is used to determine a first beam, and the first beam is used to transmit or receive a sensing signal.

68. The device of claim 67, wherein the first information comprises first beam indication information corresponding to the first beam.

69. The device of claim 68, wherein a receiving end of the first information is a first communication device, and the first information is different from second beam indication information used for the first communication device to transmit or receive a communication signal.

70. The device of claim 68, wherein a receiving end of the first information is a first communication device, and the first information is the same as second beam indication information used for the first communication device to transmit or receive a communication signal.

71. The device of any one of claims 68 to 70, wherein the first information is associated with one or more of the following: a first geographic location and a first time-domain resource.

72. The device of any one of claims 68 to 71, wherein the first information comprises a plurality of pieces of candidate beam indication information, the plurality of pieces of candidate beam indication information are associated with different geographic locations or different time-domain resources, and one of the different geographic locations corresponds to one beam used to transmit or receive the sensing signal.

73. The device of claim 71, wherein a range of the first geographic location is determined based on one or more of the following granularities: a cell, a Synchronization Signal Block (SSB), a Radio Access Network (RAN)-based Notification Area (RNA), a Tracking Area (TA), and a tracking area list.

74. The method of any one of claims 71 to 73, wherein the beam used to transmit or receive the sensing signal is determined based on one or more of the following: an Identifier (ID) of a cell that is resided or accessed, an RNA ID, a TA ID, an SSB with a highest measurement result for a current wireless signal, and an SSB selected by a first communication device; and the first communication device is a receiving end of the first information.

75. The device of any one of claims 68 to 74, wherein the first information comprises a plurality of pieces of candidate beam indication information, and the device further comprises:
a second transmission module, configured to transmit second information, wherein the second information is used to indicate activation of using the first beam indication information.

76. The device of claim 75, wherein the first beam indication information belongs to the plurality of pieces of candidate beam indication information.

77. The device of claim 75 or 76, wherein the second information is carried in first signaling, and the first signaling comprises one or more of the following: Medium Access Control (MAC) Control Element (CE) signaling, Radio Resource Control (RRC) signaling, Sidelink Control Information (SCI), and an interface between access network devices.

78. The device of claim 77, wherein the first signaling is different from second signaling, and the second signaling is used to carry second beam indication information for a communication signal.

79. The device of any one of claims 68 to 78, wherein the first information is preconfigured by the second communication device.

80. The device of any one of claims 68 to 79, wherein the first beam indication information comprises one or more of the following configurations: an identifier (ID) of a Transmission Configuration Indicator (TCI) state, an ID of a Quasi-Co-Location (QCL) reference signal, and a QCL type.

81. The device of any one of claims 68 to 80, wherein the first information is carried in one or more of the following: Non-Access Stratum (NAS) signaling, Radio Resource Control (RRC) signaling, Medium Access Control (MAC) Control Element (CE) signaling, and an interface between access network devices.

82. The device of claim 68 to 81, further comprising:
a receiving module, configured to receive a first request, wherein the first request is used to acquire or update the first information.

83. The device of claim 67, wherein the first information is used to indicate location information of a sensing target.

84. The device of claim 83, wherein the first information comprises the location information of the sensing target.

85. The device of claim 83, wherein the first information comprises information related to a third communication device, the information related to the third communication device is used for a first communication device to determine a beam used to transmit or receive the sensing signal, and the first communication device is a receiving end of the first information.

86. The device of claim 85, wherein the information related to the third communication device comprises one or more of the following:
beam indication information corresponding to a communication link between the third communication device and the first communication device; and
identifier (ID) information of the third communication device.

87. The device of claim 67 to 86, wherein a receiving end of the first information is a first communication device, the first communication device is a terminal device, and the second communication device is one of the following: an access network device, a core network device, or a terminal device.

88. The device of claim 67 to 86, wherein a receiving end of the first information is a first communication device, the first communication device is an access network device, and the second communication device is the access network device or a core network device.

89. A device for wireless communication, wherein the device for wireless communication is a first communication device, and the device for wireless communication comprises a transceiver, a memory and a processor, wherein the memory is configured to store a program, and the processor is configured to call the program in the memory to enable the device for wireless communication to perform the method of any one of claims 1 to 22.

90. A device for wireless communication, wherein the device for wireless communication is a first communication device, and the device for wireless communication comprises a transceiver, a memory and a processor, wherein the memory is configured to store a program, and the processor is configured to call the program in the memory to enable the device for wireless communication to perform the method of any one of claims 23 to 44.

91. A device, comprising: a processor configured to call a program from a memory, to enable the device to perform the method of any one of claims 1 to 44.

92. A chip, comprising: a processor configured to call a program from a memory, to enable a device installed with the chip to perform the method of any one of claims 1 to 44.

93. A computer-readable storage medium, configured to store a program, wherein the program causes a computer to perform the method of any one of claims 1 to 44.

94. A computer program product, comprising a program, wherein the program causes a computer to perform the method of any one of claims 1 to 44.

95. A computer program, wherein the computer program causes a computer to perform the method of any one of claims 1 to 44.
